# EUROPÄISCHE PATENTSCHRIFT

(11) **EP 1 554 559 B1**
(45) Veröffentlichungstag und Bekanntmachung des Hinweises auf die Patenterteilung: **13.06.2007**
(21) Anmeldenummer: 03788765.0
(22) Anmeldetag: 23.10.2003
(51) Int. Cl.: G01N 3/46, B23Q 1/36

(54) **PROBENTISCH FÜR DIE MESSUNG LATERALER KRÄFTE UND VERSCHIEBUNGEN**
TEST TABLE FOR MEASURING LATERAL FORCES AND DISPLACEMENTS
TABLE D'ESSAI POUR LA MESURE DE FORCES ET DE DEPLACEMENTS LATERAUX

(30) Priorität: 24.10.2002 DE 10249767
(43) Veröffentlichungstag der Anmeldung: 20.07.2005
(73) Patentinhaber: ASMEC Advanced Surface Mechanics GmbH, 01454 Radeberg (DE)
(72) Erfinder: CHUDOBA, Thomas, 01099 Dresden (DE); SCHWARZER, Norbert, 04838 Eilenburg (DE); HERMANN, Ilja, 08294 Lössnitz (DE)
(74) Vertreter: Rumrich, Gabriele
(86) Internationale Anmeldenummer: PCT/DE2003/003556
(87) Internationale Veröffentlichungsnummer: WO 2004/040265

(56) Entgegenhaltungen:
- WO-A-02/16907
- WO-A-99/46576
- US-A- 2 573 286
- US-A- 3 201 980
- US-A- 4 157 818
- US-A- 5 051 594
- US-A- 5 343 748
- WU T W: "MICROSCRATCH AND LOAD RELAXATION TESTS FOR ULTRA-THIN FILMS" JOURNAL OF MATERIALS RESEARCH, NEW YORK, NY, US, Bd. 6, Nr. 2, Februar 1991 (1991-02), Seiten 407-426, XP002900499 ISSN: 0884-2914

## Beschreibung

Die Erfindung betrifft einen Probentisch für die Messung lateraler Kräfte und Verschiebungen nach dem Oberbegriff des ersten Patentanspruchs.

Die Messung der lateralen Kräfte und Verschiebungen erfolgt bei gleichzeitiger Anwendung von Normalkräften, und findet insbesondere bei Nanoindentern sowie bei Scratch- und Verschleißtestern Anwendung.

Bei diesen Geräten wird üblicherweise über einen Diamantprüfkörper eine Normalkraft auf eine zu untersuchende Probe aufgebracht und die durch die Normalkraft verursachte Verschiebung gemessen. Zusätzlich wird der Probentisch unter den Prüfkörper zur Erzielung einer Relativbewegung lateral bewegt. Die dafür benötigte Kraft und die Größe der lateralen Verschiebung werden gemessen.

In WO 02/16907 A1 wird eine Vorrichtung zur Prüfung der Kratzfestigkeit (Scratch-Tester) beschrieben. Der Probentisch ist tangential beweglich gelagert, wobei die Beweglichkeit durch zwei C-förmige Biegeteile erreicht wird, die jeweils an den Innenkanten mit Einkerbungen versehen sind. Die durch das Scratch-Werkzeug auf die Probe ausgeübte Tangentialkraft wird am Probentisch über einen Messwertgeber erfasst. WO 99/46576 betrifft eine Vorrichtung zur Messung der Kratzfestigkeit von Beschichtungen (.Scratch- Tester), die einen Indentor- Teil und einen Probentisch besitzt. Der Probentisch besteht aus einer Klemmvorrichtung für die Probe, die auf einem I-förmigen Block befestigt wird, der seinerseits über vier horizontal ausgerichtete stehende Membranfedern an einem Halterungsblock angebracht wurde, wodurch die Probe lateral beweglich ist. Die Tangentialkräfte werden über einen Sensor erfasst, während die Indentorspitze über die Probenoberfläche gezogen wird. Die Federn stehen dabei nicht unter einer Zug-Vorspannung. Außerdem erstreckt sich die Blattfederlängsrichtung horizontal und nicht vertikal in Richtung der Normalkraft, wodurch sich ein ungünstigeres Wirksystem ergibt.

Aufgabe der Erfindung ist es, einen Probentisch zu konzipieren, mit dem normale Kraft und Verschiebung als auch laterale Kraft und Verschiebung jeweils unabhängig voneinander mit hoher Genauigkeit gemessen werden können, wobei der Probentisch selbst auch bei Einwirkung großer Normalkräfte keine Verschiebungen verursacht.

Diese Aufgabe wird mit den kennzeichnenden Merkmalen des ersten Patentanspruchs gelöst, vorteilhafte Weiterbindungen ergeben sich aus den Unteransprüchen.

Der Probentisch für die Messung lateraler Kräfte und Verschiebungen bei bedarfsweise gleichzeitiger Anwendung von Normalkräften, insbesondere bei Nanoindentern sowie bei Scratch und Verschleißtestern, ist lateral beweglich gelagert, wobei die laterale Kraft und Verschiebung über eine Messwerterfassung ermittelbar ist. Erfindungsgemäß wird der Probentisch zwischen mindestens zwei sich in Blattfederlängsrichtung senkrecht erstreckenden und in Richtung der zu erzeugenden lateralen (horizontalen) Bewegung des Probentisches lateral auslenkbaren Blattfedern befestigt.

Die Blattfedern werden dabei ihrem unteren Ende und an ihrem oberen Ende an einem Rahmen vorzugsweise unter Vorspannung befestigt.

Zwischen dem unteren Ende und dem oberen Ende der Blattfedern wird der Probentisch z.B. punktförmig an diesen aufgehangen.

Die Anordnung des Probentisches erfolgt dabei bevorzugt in der Mitte der Blattfedern, wobei sich zwei Blattfedern als Blattfederpaar gegenüberstehen. Dabei ist es möglich, den Probentisch auch zwischen mehreren Blattfederpaaren zu lagern.

Die Dicke der Blattfedern sollte größer/ gleich ihrer lateralen Auslenkung sein, um Linearität zu wahren.

Der Probentisch ist weiterhin vorteilhafter Weise mit einer Dämpfungseinheit verbunden. Dazu findet bevorzugt ein unter dem Probentisch angeordnetes Ölbad Anwendung, in welches ein am Probentisch angeordnetes Dämpfungselement eintaucht Diese Dämpfungseinheit ist so zu dimensionieren, daß insbesondere Schwingungen, die aus der Umgebung kommen, effektiv gedämpft werden ohne die gewünschte laterale Bewegung des Tisches merklich zu beeinflussen.

Der Probenhalter ist vertikal beweglich ausgeführt, um die Probenoberfläche auch bei unterschiedlich dicken Proben auf die gleiche Höhe einstellen zu können.

Die Messwerterfassung weist zur Erfassung der lateralen Kraft und Verschiebung einen Schaft auf, der nahe an der Probe abgreift. Dieser Schaft ist im Bereich vertikal zwischen Mitte der Federn und Probenoberfläche sowie horizontal genau in der Mitte des Probenhalters befestigt und dient zur Verschiebung des Tisches in lateraler Richtung sowie zur Messung dieser Verschiebung. Der Schaft kann ebenfalls auf Federelemente gelagert werden, aus deren Auslenkung direkt die Lateralkraft bestimmt werden kann. Die Messung der Verschiebung des Schaftes erfolgt durch geeignete Messmittel. (z.B. LVDTs).

Durch eine zyklische Verschiebung des Tisches in lateraler Richtung sind auch dynamische Messungen möglich. Damit können tribologische Kontakte simuliert werden, z.B. von Zahnrädern während des Laufes. Die Schwingungen aus der Umgebung werden durch die unter dem Probentisch angeordnete Dämpfungseinheit verringert.

Die Messwerterfassung zur Bestimmung der lateralen Kraft und Verschiebung kann auch optisch erfolgen.

Die erfindungsgemäße Lösung sieht bevorzugt 4 senkrecht gegenüberstehende Blattfedern vor, die an einem Rahmen unter Zugspannung befestigt sind. Der Probentisch ist punktartig in der Mitte der Blattfedern befestigt. Dadurch wird eine sehr hohe Verwindungs- und Normalsteifigkeit von Rahmen und Probentisch erzielt

Der Probentisch ist somit in der Mitte der Blattfedern aufgehangen, wodurch ein neuartiges besseres Wirkprinzip geschaffen wird, welches sich durch hohe Verwindungs- und Normalsteifigkeit sowohl von Rahmen als auch von Probentisch auszeichnet.

Der Hauptvorteil der Erfindung besteht darin, dass eine relativ hohe Normalkraft aufgebracht werden kann, ohne dass es zu einer Verschiebung des Probentisches in Normalrichtung kommt und gleichzeitig eine leichte laterale Verschiebung des Probentisches möglich ist. Die Größe der Verschiebung ist dabei genau proportional zur Auslenkung der Federn. Weiterhin können sowohl normale Kraft und Verschiebung als auch laterale Kraft und Verschiebung unabhängig voneinander mit hoher Genauigkeit gemessen werden. Dabei hängt die erreichbare Genauigkeit von der Dimensionierung der Federn und der Auflösung der Messwertaufnehmer ab. Eine eventuell verbleibende geringe normale Durchbiegung des Systems kann erfasst und softwaremäßig korrigiert werden.

Mit der erfindungsgemäßen Lösung in einem Nanoindenter wird es möglich, den Beginn einer Rissbildung oder Plastische Deformation in der Probe genau zu detektieren und damit quantitative Aussagen über mechanische Kennwerte des Probenmaterials zu erlangen. Es ist möglich, mit dem neuartigen Probentisch eine Auflösung der lateralen Verschiebung bis unter 1nm und der lateralen Kraft bis unter 1µm zu erzielen. Weiterhin ist es erstmalig möglich, laterale Kräfte und Verschiebungen zu messen, die ausschließlich durch die Normalkraft verursacht werden und nicht durch eine laterale Verschiebung des Probenhalters oder Prüfkörpers.

Die Erfindung wird nachfolgend anhand eines Ausführungsbeispieles näher erläutert.

Es zeigen:
- Fig. 1:: Prinzipdarstellung in der Draufsicht,
- Fig. 2:: Prinzipdarstellung in der Vorderansicht gem. Fig. 1,
- Fig. 3:: 3-dimensionale Prinzipdarstellung der Befestigung der Federn.

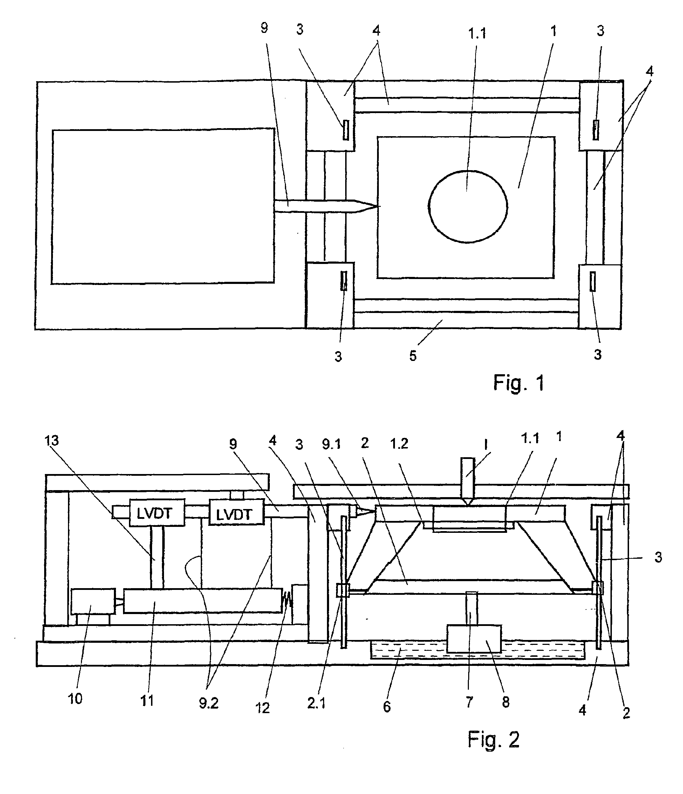

Gem. Fig. 1 und 2 wird der Probentisch 1 mit seinem, mittels vertikal verstellbaren Probenhalter 1.1 (Feststellung durch eine Kontermutter 1.2) über Befestigungselemente 2.1 und sich zwischen den Befestigungselementen 2.1 erstreckenden Längsträgern 2 an insgesamt vier senkrecht stehenden Blattfedern 3 befestigt. Die vier Blattfedern 3 sind an ihren oberen und an ihren unteren Enden zwischen einem Rahmen 4 und einer Grundplatte 5 unter Wirkung einer axialen Vorspannung befestigt, wobei der Rahmen 4 auf der Grundplatte 5 sitzt. In der Grundplatte 5 befindet sich eine Ölwanne 6, in welche von der Unterseite des Probentisches 1 ein, an einer Kolbenstange 7 befestigter Kolben 8 reicht, wodurch eine Dämpfung der Umgebungsschwingungen erzielbar ist. Im Bereich vertikal zwischen zwei Blattfedern 3 und der Probenoberfläche (nicht dargestellt) und horizontal genau in der Mitte des Probenhalters 1.1 ist gem. Fig. 2 ein waagerechter Schaft 9 mit einer Spitze 9.1 befestigt, an welchem zwei LVDTs vorgesehen sind und der zur Verschiebung des Tisches in lateraler Richtung und zur Messung der Verschiebung mit den LVDTs dient. Der Schaft 9 ist dabei an zwei Federelementen 9.2 axial verschiebbar gelagert. Mit einem Piezo-Element 10, welches mit den LVDTs über einen wagerechten Balken 11, der sich gegen eine Feder 12 abstützt und über einen senkrechten Balken 13, verbunden ist, wird die Verschiebung des Tisches 1 gegen die Blattfedern 3 ausgelöst. Mit einem über dem Probentisch 1.1 angeordneten Indenter I wird die Normalkraft aufgebracht.

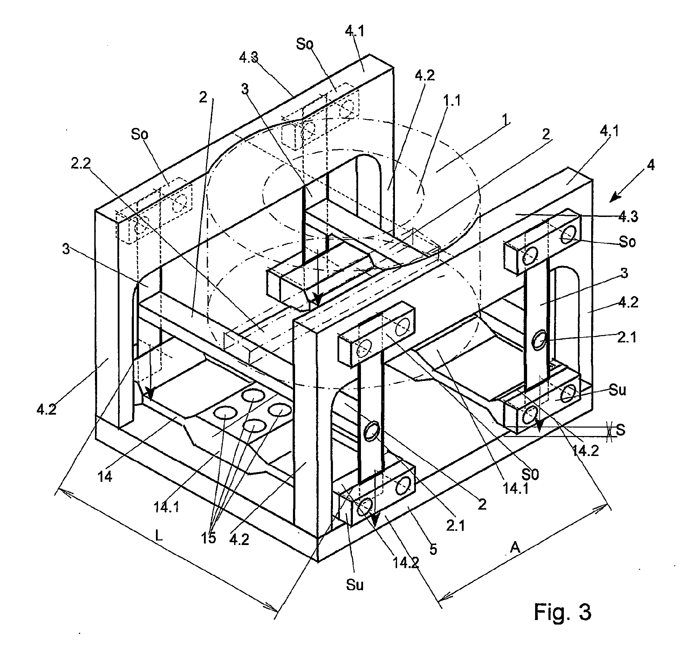

Eine dreidimensionale Prinzipdarstellung der Befestigung der Blattfedern 3 am Rahmen 4 und an der Grundplatte 5 wird in Fig. 3 gezeigt. Der Probentisch 1 mit seinem Probenhalter 1.1 ist durch eine Srich-Punkt-Linie nur angedeutet. Er sitzt auf zwei Längsträgern 2, wobei jeder Längsträger 2 an seinen beiden Enden über nur angedeutete Befestigungselemente 2.1 mit einer senkrecht stehenden Blattfeder 3 verbunden ist. Die beiden Längsträger können zusätzlich miteinander über einen gestrichelt angedeuteten Querträger 2.2 (oder über eine nicht dargestellte Platte) auf welchem der Probentisch sitzt, versteift sein. Auf der Grundplatte 5 ist der Rahmen 4 angeordnet, welcher aus zwei U-förmigen Trägern 4.1 besteht. Jeder Träger 4.1 sitzt mit zwei zueinander parallelen vertikalen Schenkeln 4.2 auf der Grundplatte 4 auf, zwischen den beiden vertikalen Schenkeln 4.2 eines Trägers 4.1 erstreckt sich ein horizontaler Schenkel 4.3. An jedem horizontalen Schenkel 4.3 eines Trägers 4.1 sind die oberen Enden zweier Blattfedern 3 mittels oberer Spannbacken Sₒ befestigt.

Auf der Grundplatte 5 liegen zwei Festkörpergelenke 14 an ihrer Mitte 14.1 auf und sind z.B. mittels Schrauben 15 befestigt. Der Abstand A der Festkörpergelenke 14 entspricht dem Abstand zweier an einem horizontalen Schenkel 4.3 befestigten Blattfedern 3, die Länge L eines jeden Festkörpergelenks 14 entspricht dem Abstand zweier sich gegenüberliegender Blattfedern 3. Jede Blattfeder 3 wird an ihrem unteren Ende am entsprechenden Ende 14.2 eines Festkörpergelenks 14 über untere Spannbacken Sᵤ eingespannt. Die beiden Enden 14.2 eines jeden Festkörpergelenkes 14 sind zur Grundplatte 5 um einen Spalt S beabstandet. Jedes Ende 14.2 eines Festkörpergelenkes 14 kann über nicht dargestellte, mit der Grundplatte 5 und dem Ende 14.2 des Festkörpergelenkes in Eingriff stehende Spannelemente in Richtung zur Grundplatte (Pfeilrichtung) verspannt werden, wodurch sich der Spalt S verringert und die Blattfedern 3 axial vorgespannt werden.

Die Einrichtung zur Erzeugung der lateralen Kraft, der Normalkraft, der Indenter sowie die LVDS und die Öldämpfung sind in Fig. 3 nicht dargestellt.

Alternativ ist es zu der in Fig. 3 gezeigten Variante auch möglich, den Probentisch an nur zwei oder drei Blattfedern oder auch an drei oder mehr Blattfederpaaren aufzuhängen.

## Patentansprüche

1. Probentisch für die Messung lateraler Kräfte und Verschiebungen bei bedarfsweise gleichzeitiger Anwendung von Normalkräften, insbesondere bei Nanoindentern sowie bei Scratch und Verschleißtestern, wobei der Probentisch lateral beweglich gelagert ist und die laterale Kraft und Verschiebung über eine Messwerterfassung ermittelbar ist,
**dadurch gekennzeichnet,**
**dass** der Probentisch (1) zwischen mindestens zwei senkrecht stehenden und in Richtung der zu erzeugenden lateralen und horizontalen Bewegung des Probentisches (1) lateral auslenkbaren, an ihrem unteren Ende und an ihrem oberen Ende an einem Rahmen (4) befestigten, Blattfedern (3) angeordnet und an den Blattfedern (3) zwischen deren unterem und deren oberem Ende befestigt ist.

2. Probentisch nach Anspruch 1, **dadurch gekennzeichnet, dass** die Blattfedern (3) mit einer Vorspannung/Zugspannung beaufschlagt sind.

3. Probentisch nach Anspruch 1 oder 2, **dadurch gekennzeichnet, dass** der Probentisch (1) im wesentlichen in der Mitte der Blattfedern (3) befestigt ist.

4. Probentisch nach einem der Ansprüche 1 bis 3, **dadurch gekennzeichnet, dass** der Probentisch (1) an einer gegenüber der Länge der Blattfedern (3) geringen Fläche an den Blattfedern (3) aufgehängt ist.

5. Probentisch nach einem der Ansprüche 1 bis 4, **dadurch gekennzeichnet, dass** sich je zwei Blattfedern (3) als ein Blattfedernpaar gegenüberstehen.

6. Probentisch nach Anspruch 5, **dadurch gekennzeichnet, dass** der Probentisch (1) zwischen mehreren nebeneinander angeordneten Blattfederpaaren angeordnet ist.

7. Probentisch nach einem der Ansprüche 1 bis 6, **dadurch gekennzeichnet, dass** die Dicke der Blattfedern (3) annähernd größer/gleich ihrer lateralen Auslenkung ist.

8. Probentisch nach einem der Ansprüche 1 bis 7, **dadurch gekennzeichnet, dass** der Probentisch (1) mit einer Dämpfungseinheit verbunden ist.

9. Probentisch nach Anspruch 8, **dadurch gekennzeichnet, dass** die Dämpfungseinheit ein unter dem Probentisch (1) angeordnetes Ölbad (6) ist, in welches ein am Probentisch (1) angeordnetes Dämpfungselement eintaucht.

10. Probentisch nach einem der Ansprüche 1 bis 9 , **dadurch gekennzeichnet, dass** der Probentisch (1) einen Probenhalter (1.1) aufweist, der vertikal beweglich ausgeführt ist.

11. Probentisch nach einem der Ansprüche 1 bis 10 , **dadurch gekennzeichnet, dass** die Messwerterfassung zur Erfassung der lateralen Kraft und Verschiebung einen Schaft (9) aufweist, der nahe an der Probe angreift.

12. Probentisch nach einem der Ansprüche 1 bis 11 , **dadurch gekennzeichnet, dass** die Messwerterfassung zur Bestimmung der lateralen Kraft und Verschiebung optisch erfolgt.

## Claims

1. A sample table for the measurement of lateral forces and displacements with the optional simultaneous application of normal forces, especially for nanoidenters and scratch and wear testers, with the sample table being held so as to be laterally movable and the lateral force and the displacement being determinable by way of measurement data acquisition, **characterized in that** the sample table (1) is arranged between at least two upright leaf springs (3) which are laterally deflectable in the direction of the lateral and horizontal movement of the sample table (1) to be produced and which are fastened at their bottom end and their top end to a frame (4), and the sample table is fastened to the leaf springs (3) between their upper and their lower end.

2. A sample table according to claim 1, **characterized in that** the leaf springs (3) are subjected to a bias/tensile stress.

3. A sample table according to claim 1 or 2, **characterized in that** the sample table (1) is fastened substantially in the middle of the leaf springs (3).

4. A sample table according to one of the claims 1 to 3, **characterized in that** the sample table (1) is suspended on the leaf springs (3) on a surface which is small relative to the length of the leaf springs (3).

5. A sample table according to one of the claims 1 to 4, **characterized in that** two leaf springs (3) each stand opposite each other as a pair of leaf springs.

6. A sample table according to claim 5, **characterized in that** the sample table (1) is arranged between several pairs of leaf springs arranged adjacent to one another.

7. A sample table according to one of the claims 1 to 6, **characterized in that** the thickness of the leaf springs (3) is approximately larger or equal to its lateral deflection.

8. A sample table according to one of the claims 1 to 7, **characterized in that** the sample table (1) is connected to a damping unit.

9. A sample table according to claim 8, **characterized in that** the damping unit is an oil bath (6) which is arranged beneath the sample table (1) and into which immerses a damping element arranged on the sample table (1).

10. A sample table according to one of the claims 1 to 9, **characterized in that** the sample table (1) comprises a sample holder (1.1) which is provided with a vertically movable configuration.

11. A sample table according to one of the claims 1 to 10, **characterized in that** the measurement data acquisition comprises a shaft (9) for detecting the lateral force and the displacement, which shaft acts closely upon the sample.

12. A sample table according to one of the claims 1 to 11, **characterized in that** the measurement data acquisition for determining the lateral force and displacement occurs optically.

## Revendications

1. Banc d'essai pour mesurer des forces et des déplacements latéraux simultanément à l'application, en cas de besoin, de forces normales, notamment dans le cas de nanoindenteurs ainsi que de testeurs d'usure et d'égratignures, le banc d'essai étant monté mobile latéralement et la force et le déplacement latéraux étant aptes à être déterminés par relèvement d'une valeur mesurée, **caractérisé en ce que** le banc d'essai (1) est disposé entre au moins deux ressorts à lames (3) verticaux, qui sont aptes à subir un débattement latéral en direction du mouvement latéral et horizontal du banc d'essai (1) qu'il y a lieu de générer et qui sont fixés par leur extrémité inférieure et leur extrémité supérieure à un cadre (4), et est fixé aux ressorts à lames (3) entre leur extrémité inférieure et leur extrémité supérieure.

2. Banc d'essai selon la revendication 1, **caractérisé en ce que** les ressorts à lames (3) sont soumis à une précontrainte/contrainte de traction.

3. Banc d'essai selon la revendication 1 ou 2, **caractérisé en ce que** le banc d'essai (1) est fixé sensiblement au centre des ressorts à lames (3).

4. Banc d'essai selon l'une quelconque des revendications 1 à 3, **caractérisé en ce que** le banc d'essai (1) est suspendu aux ressorts à lames (3) par une surface de petite envergure par rapport à la longueur des ressorts à lames (3).

5. Banc d'essai selon l'une quelconque des revendications 1 à 4, **caractérisé en ce que** deux ressorts à lames (3) respectifs sont situés en regard et forment une paire de ressorts à lames.

6. Banc d'essai selon la revendication 5, **caractérisé en ce que** le banc d'essai (1) est interposé entre plusieurs paires de ressorts à lames disposées côte à côte.

7. Banc d'essai selon l'une quelconque des revendications 1 à 6, **caractérisé en ce que** l'épaisseur des ressorts à lames (3) est approximativement supérieure ou égale à leur débattement latéral.

8. Banc d'essai selon l'une quelconque des revendications 1 à 7, **caractérisé en ce que** le banc d'essai (1) est relié à une unité d'amortissement.

9. Banc d'essai selon la revendication 8, **caractérisé en ce que** l'unité d'amortissement est un bain d'huile (6) disposé sous le banc d'essai (1) dans lequel est plongé un élément amortisseur disposé sur le banc d'essai (1).

10. Banc d'essai selon l'une quelconque des revendications 1 à 9, **caractérisé en ce que** le banc d'essai (1) comporte un porte-échantillon (1.1) qui est réalisé mobile verticalement.

11. Banc d'essai selon l'une quelconque des revendications 1 à 10, **caractérisé en ce que** l'organe d'enregistrement de la valeur mesurée destiné à relever la force et le déplacement latéraux comporte une tige (9) attachée à proximité de l'échantillon.

12. Banc d'essai selon l'une quelconque des revendications 1 à 11, **caractérisé en ce que** l'enregistrement de la valeur mesurée pour déterminer la force et le déplacement latéraux se fait visuellement.
